# EUROPEAN PATENT SPECIFICATION

(11) **EP 2 006 131 B1**
(45) Date of publication and mention of the grant of the patent: **20.03.2013**
(21) Application number: 08252147.7
(22) Date of filing: 20.06.2008
(51) Int. Cl.: B60G 17/015, B60G 17/052

(54) **Vertical air spring control**
Vertikale Luftfeder-Steuerung
Contrôle vertical d'une ressort pneumatique

(30) Priority: 21.06.2007 US 936543 P
(43) Date of publication of application: 24.12.2008
(73) Proprietor: Barksdale, Inc., Los Angeles, California 90058 (US)
(72) Inventor: Steinbuchel, Herman J., Upland CA 91784 (US)
(74) Representative: Hedley, Nicholas James Matthew

(56) References cited:
- EP-A- 1 426 649
- WO-A-01/14156
- US-A- 2 959 426
- US-A1- 2003 085 535

## Description

### CROSS-REFERENCE

Applicant claims priority from US Provisional patent application SN 60/936,543 filed June 21, 2007.

### BACKGROUND OF THE INVENTION

Large land vehicles such as large trucks, commonly use air bags instead of springs to support an upper vehicle main part such as the vehicle chassis on a lower main part such as an axle, or to support a cab on the chassis. Like springs, the air bags absorb small vertical movements of the axles as the vehicle moves. For a proper ride, it is important that the air bag height be maintained close to the manufacturer's preferred height. At the selected height, the air bag pressure will also be optimum. An air bag requires a control to control the movement of pressured air at a pressure such as 120 psi (830kPa), including the flow of air into an air bag when it is too short, and the flow of air out of the air bag when it is too tall.

One type of common control includes a valve with a rotatable valve member that can be rotated to any one of three positions within a housing to control the flow of air into or out of the air bag, or to prevent any air flow. The housing of the rotatable valve is fixed to one main vehicle part such as the chassis, and the rotatable valve member is connected to a linkage that consists of two links that connect to an axle. The linkage has the disadvantage that space must be left around the links, and the links constitute narrow elongated parts that can catch on clothing, cables, hoses, and other parts during vehicle repairs. A pressured air control for controlling air flow to and from an air bag, that could fit into the space between vehicle parts such as a chassis and axle occupied by prior controls, and which occupied little space and avoided long narrow parts that projected into otherwise empty space, would be of value.
[0003a] US2003/085535 that forms the closest prior art according to the preamble of claim 1 discloses an air suspension system for an automotive vehicle having a bellows supporting the body of the vehicle above an axle; compressed air can be introduced or removed from the bellows via a sliding valve that includes a valve body having a central passage that is connected to a source of compressed air and to a vent for discharging air from the bellows to atmosphere. A valve body is slideable in the central passage and includes ring seals to prevent air passing along the central passage. The valve body is connected to the vehicle axle and so moves along the central passage in accordance with the vertical movement of the axle. The ring seals are located so that when the distance between the vehicle body and the axle is below a threshold, air is introduced into the bellows and when it is above a ceiling value, air is vented from the bellows.

### SUMMARY OF THE INVENTION

In accordance with one embodiment of the invention, a control is provided for controlling the flow of pressured air into and out of an air bag, which fits into a vertical space of a height such as 1.5 feet (46 centimeters) that is commonly left for air bags in large vehicles, and which has a small width and length without long narrow parts that would project into the vertical space. The control includes vertically elongated members such as tubes that can slide vertically one within the other. When the air bag height increases to above optimum height, the tubes telescope apart to open one air flow path which connects the air bag to an exhaust port. When the air bag height decreases below optimum, the tubes telescope together and open another flow path that connects the high pressure air inlet port to the air bag.

The novel features of the invention are set forth with particularity in the appended claims. The invention will be best understood from the following description when read in conjunction with the accompanying drawings.
[0005a] In the control, there is a first valve that may comprise walls forming a first valve seat at an upper portion of a first telescope member and a vertical hole within said valve seat, a plunger fixed to a second telescope member and moveable vertically against and away from said first valve seat to allow the movement of pressured air from a pressured air port through said first valve seat, said plunger extending through said hole to move away from said first valve seat when the height of the control is greater than a predetermined air bag height, and walls forming a passage part extending from said first valve seat to an air bag port.

### BRIEF DESCRIPTION OF THE DRAWINGS

Fig. 1 is a sectional rear view of a portion of a large truck, showing air bag systems of the prior art.
Fig. 2 is a partial side elevation view of the truck with air bag systems of the prior art of Fig. 1
Fig. 3 is a partial sectional rear view of the truck of Fig. 1, with an air bag control of the present invention instead of the prior art control.
Fig. 4 is a sectional view of an air bag control of a first embodiment of the invention, with the height of the controlled bag being optimal.
Fig. 5 is a view similar to that of Fig. 4, but with the air bag height being below the optimum height.
Fig. 6 is a view similar to that of Fig. 4, but with the air bag height being higher that the optimum height.
Fig. 7 is a sectional view of an air bag control of a second embodiment of the invention with the height of the controlled air bag being optimum.
Fig. 8 is an enlarged view of area 8-8 of Fig. 7.
Fig. 9 is a sectional view of the control of Fig. 7 but with a reduced height.
Fig. 10 is an enlarged view of area 10-10 of Fig. 9.
Fig. 11 is an isometric view of a valve assembly of the control of Fig.10.
Fig. 12 is a sectional view of the control of Fig. 7 but with an increased height.
Fig. 13 is an enlarged view of area 13-13 of Fig. 12.
Fig. 14 is a sectional view of an air bag control of a third embodiment of the invention, with the height of the air bag being optimum.
Fig. 15 is an enlarged view of area 15-15 of Fig. 14.
Fig. 16 is an isometric view of the valve plate of the control of Fig. 15.
Fig. 17 is a sectional view of the control of Fig. 14 but with a reduced height.
Fig. 18 is an enlarged view of area 18-18 of Fig. 17.
Fig. 19 is a sectional view of the control of Fig. 14 but with an increased height.
Fig. 20 is an enlarged view of area 19-19 of Fig. 19.

### DESCRIPTION OF THE PREFERRED EMBODIMENTS

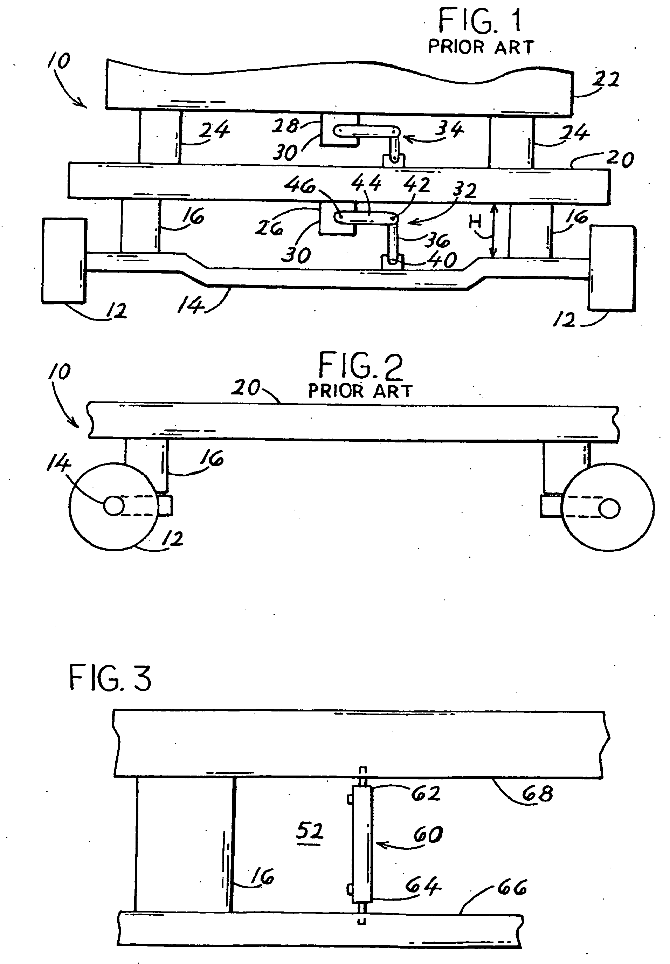

Figs. 1 and 2 shows portions of a large truck 10 which includes tires 12 that support axles 14 and air bags 16 that support the vehicle chassis 20 on the axles. Fig. 1 also shows the cab 22 of the vehicle which is supported by another set of air bags 24 on the chassis. The air bags must be maintained at close to the manufacturer's stated air bag height. Controls 26, 28 each includes a rotary valve 30 that controls the flow of air from a pressured air source at a pressure such as 120 psi (8 bars; 830 kPa), to air bags at a pressure such as 40 psi (3 bars; 280 kPa). Air flows into one or a pair of air bags such as 16 whenever the air bag height falls below the preferred height H (e.g. because of an increased load placed in the vehicle). The air bag control such as 26 also controls the exhaust of air from the air bags if their height increases above H (e.g. because of vehicle unloading or heating that expands the air). To sense the average height of a pair of air bags, the controls include linkages 32, 34 that couple two vehicle suspension parts such as the axle 14 and the chassis 20 that are separated by the air bags. Each linkage such as 32 has a link 36 with one end 40 pivotally connected to the chassis and another end 42 pivotally connected to a second link 44 that pivots about an axis 46 on the rotary valve 30. The rotary valve itself is mounted on the chassis. The control 28 for the cab is similar to that 26 for the chassis.

The valve and linkages have several disadvantages. Space must be left around the linkage element 36, 44 to assure no interference with pivoting of the linkage. The linkage and rod constitute narrow elongated parts that can catch on cables, hoses and other parts during vehicle repairs.

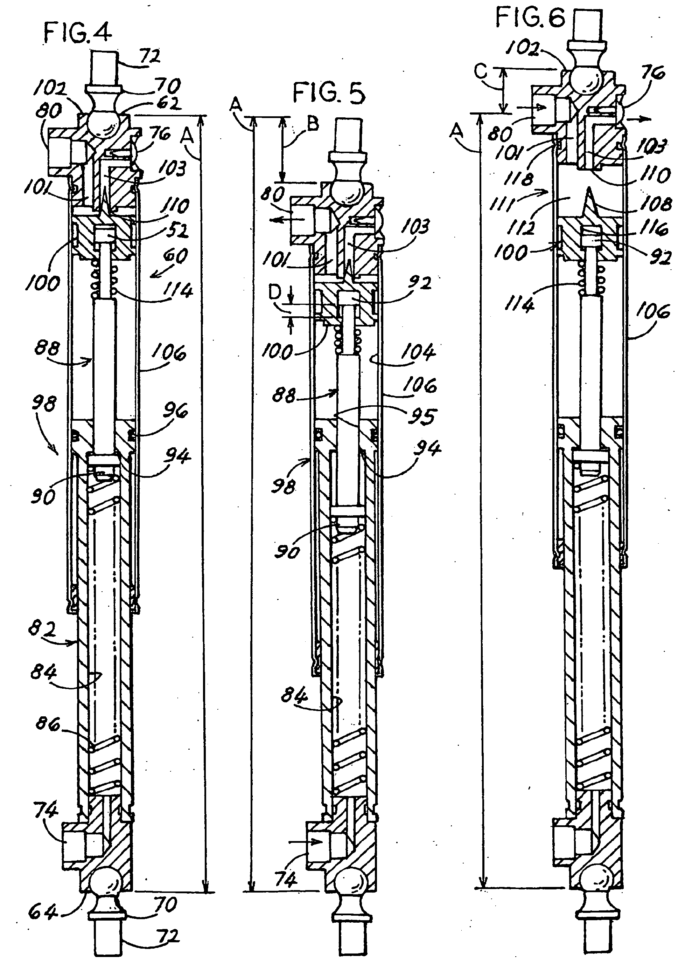

Fig. 3 shows a cylindrical vertical air bag control 60 of the present invention, that lies in the space 52 between primarily vertically spaced vehicle main parts 66, 68. The control has upper and lower ends 62, 64 and extends between the vehicle axle 66 and the vehicle chassis 68, or between the vehicle cab 22 (Fig. 1) and the vehicle chassis. Fig. 4 is a sectional view of the control 60 which has an inlet port 74 for connection to a pressured air supply, and an exhaust port 76 that exhausts air from the air bag to the atmosphere. The control also has an air bag port 80 that flows air into the air bag when the air bag height is below the manufacturer's preferred height A, and that flows air out of the air bag when its height is above the preferred height A. In Figs. 4-6 pivot mounts 70 are attached to opposite ends of the control, with each mount having a shaft 72 that mounts on a vehicle suspension part such as the axle, chassis, or cab. Other mount arrangements can be used. The control includes elongated vertical members that slide vertically relative to each other and that together, extend along the vertical distance of the control. The vertical members are preferably tubes 82, 106 that telescope in one another and that enclose at least parts of valves that control the flow of air between selected ones of the three ports and at least part of the passages along which air flows.

Fig. 4 shows the control 60 when the air bag is at the preferred height with top and bottom ends 62, 64 spaced apart by distance A, so there are no air flows into or out of any of the three ports 74, 76, 80. The control includes a tube 82 with a passage 84 through which air flows and that holds a plunger spring 86. A plunger 88 has a lower end 90 that slides in the tube passage and that is upwardly biased by the spring. The plunger has an upper end 92. The tube 82 forms a first valve seat 94, which is opened and closed by the lower end 90 of the plunger, with a hole 95 extending up from the valve seat and with a seal 96 preventing air flow around the valve seat. The plunger lower end 90 and valve seat 94 form a first valve 98 that controls flow from the inlet port 74 toward the air bag port 80. The plunger upper end 92 forms a valve head 100 that controls air flow to and from the air bag port 80 and the exhaust port 76, through passages 101, 103 formed in a top member 102. A valve member 108 and valve seat 110 (Fig. 6) form a second valve 111.

Fig. 5 shows the control at a height that is a distance B less than the selected height A which may equal the manufacturer's selected height H or be slightly different. As a result, the plunger 88 has moved down and its lower end 90 lies below valve seat 94. Pressured air that is constantly applied to the inlet port 74, flows upward through the passage 84 that holds the spring, past the lower valve seat 94, and through a pressured air passage part 104 in the tube 106. The air flows past the valve head 100 and through passage 101 and the air bag port 80 to fill the air bag and increase the height A-B of the control. When the control height increases sufficiently that the plunger lower end 90 presses upward against the first valve seat 94, the flow of pressured air to the air bag stops. The control then is at approximately the desired height A.

Fig. 6 shows a situation in which the control height has increased to a height A+C. The increased height leads to the top member 102 and a valve seat 110 therein moving up and away from the valve head 100 and from a valve member 108 that both lie at the top of the plunger. Then, air can flow from the air bag port 80, through passages 101, 103 and a short passage 112 above the plunger, and out through the exhaust port 76 to the environment. Air flows out of the air bag until the control height has decreased to the height A, at which the valve closer 108 on the valve head 100 again enters the valve seat 110 and closes it. An O-ring 118 lies between the top member 102 and the shroud 106. The valve closer 108 is tapered to provide a "proportional response" so only a small flow occurs when the valve closer is only slightly below its closed position.

Applicant notes that there is a secondary spring 114 that urges the plunger downward with respect to the valve head 100. The plunger upper end can move a limited distance within a space 116 in the valve head. The space 116 has top and bottom walls. When the plunger is in the neutral position shown in Fig. 4, a small vertical movement of the top member either upward or downward will not open the valve seats 94, 110. However, if the top member 102 moves downward far enough so the top wall of the space 116 abuts the plunger then the plunger will start to move down and the valve seat 94 will open. Similarly if the top member 102 moves upward far enough that the plunger top 92 abuts the bottom wall of the space 116, then the valve seat 110 will open. The height D (Fig. 5) of the space 116 is often referred to as the "neutral zone" which is the combined upward and downward movement of the plunger that will not open any valve. A neutral zone is useful to prevent the valve from repeatedly opening and closing, which causes repeated loss of pressured air and consequent wasting of fuel to pump the air to the pressure of the pressured air source.

Thus, when the control height decreases the control opens one valve 98 to flow pressured air from port 74 into the air bag port 80. When the control height increases the control opens another valve 111 to allow the flow of air from the air bag port 80 to the exhaust port 76.

In an air bag control of the construction in Figs. 4-6 that applicant has designed, the control had a height of 18 inches (46 cm) and a maximum horizontal width between ports 80 and 74 of 1.5 inches (3.8 cm). A control width less than half its height and preferably less than 20% of its height is desirable for light weight and to leave space for other vehicle parts.

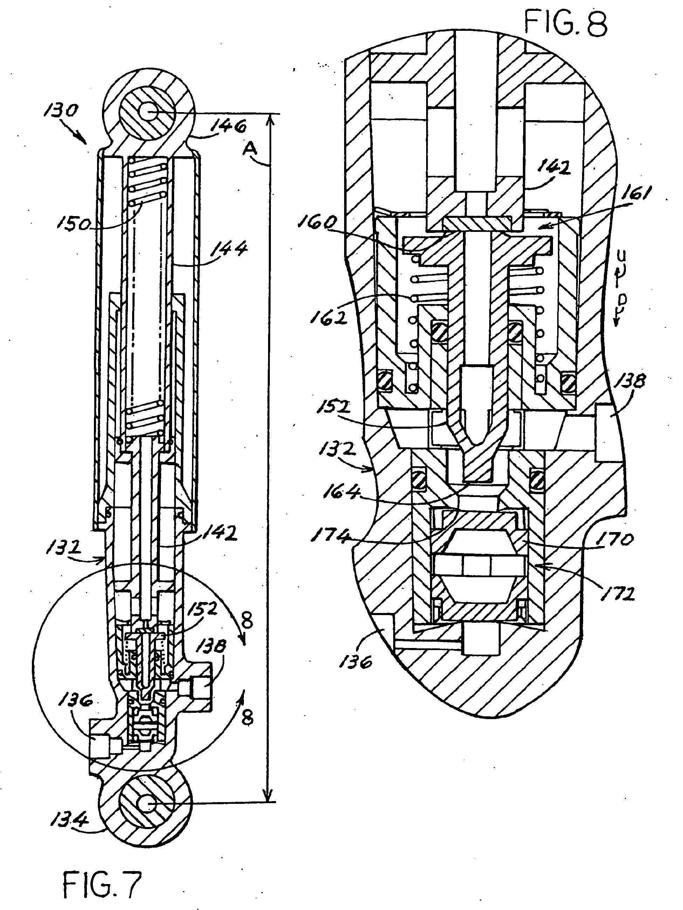

Figs 7 and 8 show an air bag control 130 of another construction, which also has the advantage of being vertically elongated and not requiring a linkage. The valve includes a lower tube or cylinder 132 that has a lower part 134 that is pivotally mounted on a lower vehicle part such as an axle. The lower cylinder forms a pressured air port 136 and an air bag port 138. An upper tube or plunger 142 lies within an upper cylinder 144 that includes a top part 146 that is pivotally mounted on one of the vehicle parts such as the chassis. The plunger 142 is downwardly biased by a main spring 150 so its lower end lies against a poppet 152.

Figs. 7 and 8 show the control in a neutral position wherein its height A is the preferred height. In this position, the poppet (valve member) 152 (Fig. 8) is biased upward against an upper valve seat 160 of valve 161, that lies at the bottom of the plunger, by a poppet spring 162. In the neutral position, the bottom 164 of the poppet is spaced from an upper member 170 of a valve assembly 172 to not open a lower valve seat 174.

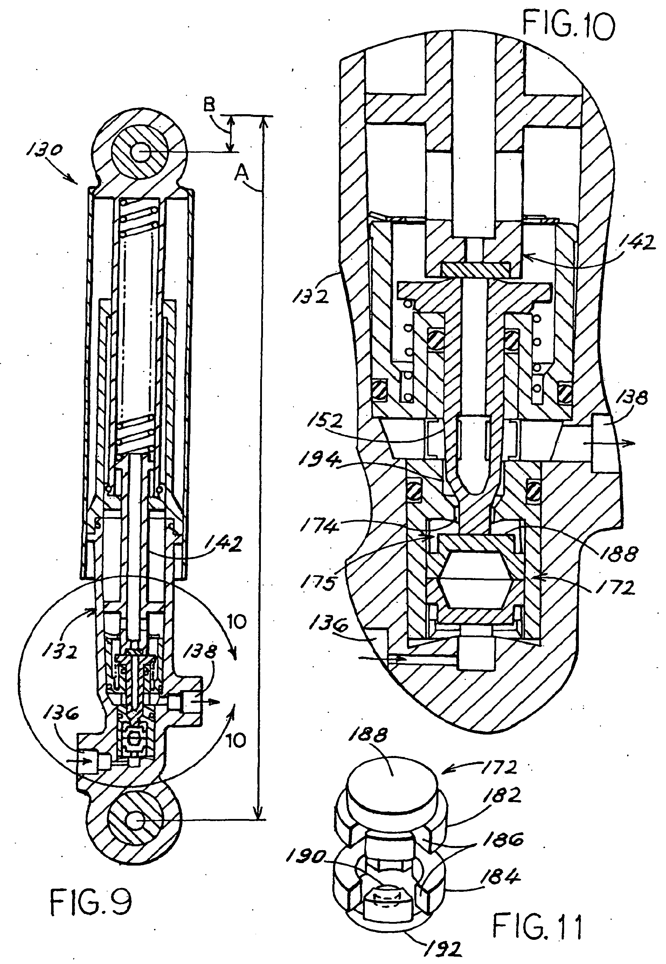

Figs 9 and 10 show the control 130 in a reduced height position A - B wherein the control height has decreased by distance B from the neutral height A. The plunger 142 has moved downward with respect to the lower cylinder 132, and the plunger 142 (Fig. 10) has pushed down the poppet 152, which has pushed down the valve assembly 172. Fig. 11 shows that the valve assembly 172 includes a pair of members 182, 184 that have slots 186. The upper valve member has a continuous top 188, but the lower valve member has a passage 190 in its bottom 192. Fig. 10 shows that when the valve assembly is pushed down, the continuous top 188 of the upper valve member moves down away from the lower valve seat 174 of a valve 175. This allows air from the pressured air port 136 to flow through the valve assembly 172, around the lower portion 194 of the poppet, and out through the air bag port 138 to fill the air bag.

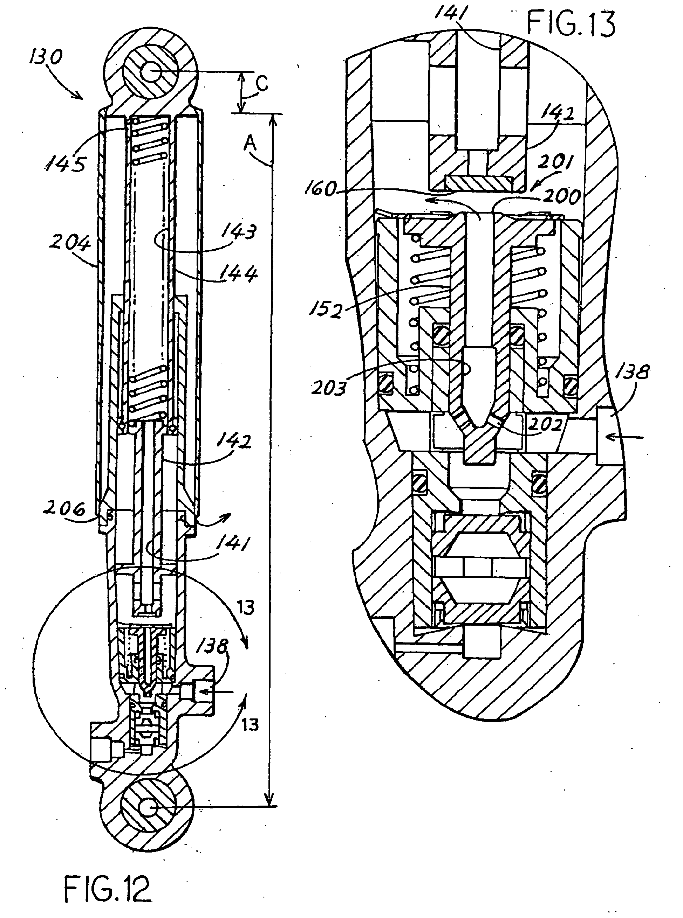

Figs 12 and 13 show the control 130 at an extended height A + C , due to the upper cylinder 144 and plunger 142 being raised. The upper valve seat 160 (Fig. 13) has lifted off a valve seat formed by the top 200 of the poppet 152. This allows air to flow from the air bag port 138 through holes 202 in the poppet, through a valve 201 formed by valve seat 200, and through a passageway 203 in the poppet, through passages (Fig. 12) 141, 143, a vent 145 and into a shroud 204. Air can pass through a gap 206 at the bottom of the shroud into the atmosphere.

Thus, when the control decreases in height it opens one valve 172 (Fig. 10) to allow pressured air flow into the air bag port 138. When the control increases in height, it opens another valve 201 (Fig. 13) to allow air to flow from the air bag port 138 through an exhaust port formed by gap 206 into the environment.

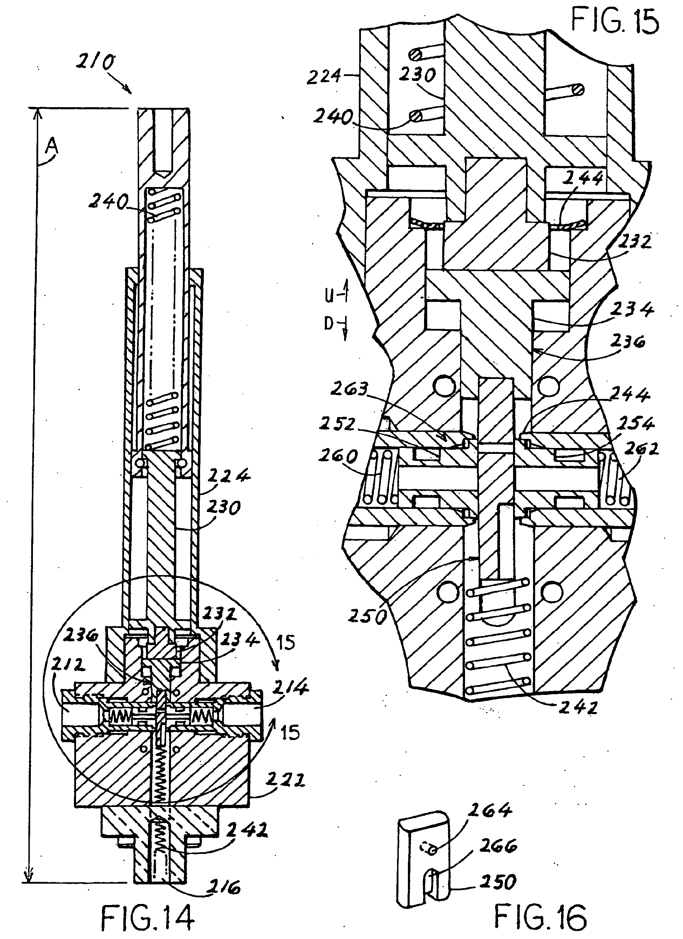

Figs 14 and 15 illustrate a control 210 of another embodiment of the invention wherein the pressured air port 212, the air bag port 214, and the exhaust port 216 are all located in a lower portion of the control. The control includes a base 222 and a tube or cylinder 224 extending up from the base. An upper member or plunger 230 (Fig. 15) has a lower end 232 that can contact a carrier 234 of a valve plate assembly 236. A plunger spring 240 presses down the plunger, and a poppet spring 242 presses up the valve plate assembly. In the neutral position of the control at height A, the springs 240, 242 balance one another and the valve plate assembly 236 lies in the position shown in Fig. 15, with the plunger lower end 232 pressing against the carrier 234 and with the carrier lower end lying above a stop 244.

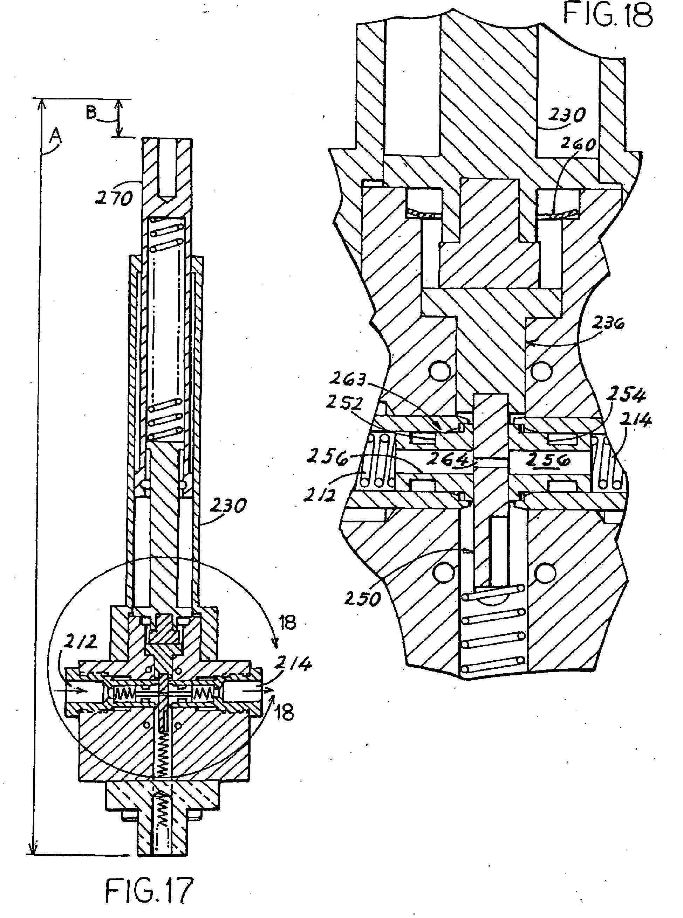

The valve plate assembly 236 (Fig. 15) includes a valve plate 250, that lies between valve members 252, 254 that are biased by valve springs 260, 262 against horizontally spaced opposite sides of the plate 250 to form a valve 263. The plate, which does not necessarily have flat opposite sides, is shown in Fig. 16 to have a through aperture 264 and to have a groove 266 with a portion that extends only partially through the plate. In the neutral position of Figs 14 and 15 no air flows between the ports. In Figs. 17 and 18 an inner cylinder 270 has moved downward by distance B, so the height of the control is A-B. Fig. 18 shows that the plate 250 has been pushed down by the plunger 230 until the plate aperture 264 has become aligned with holes 256 in the valve members 252, 254, so air can flow from the pressured air port 212 to the air bag port 214. This fills the air bags and the control height returns to A.

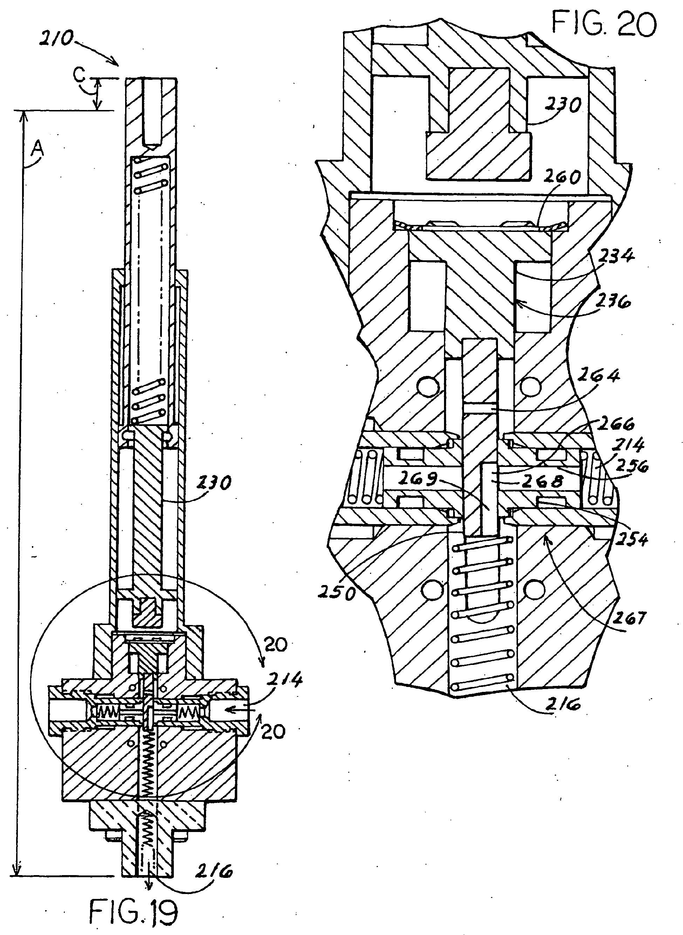

Figs. 19 and 20 shows the control with its ends at an increased height A + C. The plunger 230 has moved up and allowed the valve plate assembly 236 to move up to its uppermost position wherein the top of the carrier 234 abuts a stop 260. The groove 266 of the plate is now aligned with a hole in the valve member 254 to form a valve 267, and air can flow from the air bag port 214 through slot portion 268, 269 to the exhaust port 216. The control 210 of Figs 14-20 has the advantage that air flow is through openings of defined size so the control operate consistently. The neutral zone is the distance that the valve plate travels without allowing any air flow through its slot 266 or hole 264.

Thus, when the control decreases in height it opens one valve (formed by walls of hole 264, Fig. 18) to allow pressured air flow into the air bag port 214. When the control increases in height it opens another valve (formed by groove 266, Fig. 20) to allow air flow from the air bag port 214 to the exhaust port 216. Although the vertical air bag controls of the invention each extends primarily vertically, they each can function when turned upside-down. Therefore, a claim statement that first and second parts are respectively "upper" and "lower" parts covers the situation when the control is turned upside down.

Thus, the invention provides an air bag control that is in the shape of a small diameter post with few if any elongated parts that project from the control in the manner that a linkage projects from prior art controls. The control extends between two vehicle suspension parts, such as the axle and chassis, or chassis and driver cab. The control includes a plunger that is biased vertically by a plunger spring , with the plunger moving up and down as a top part of the control moves up and down. Downward movement of the control top opens only a first valve, or valve seat, to fill the air bags, while upward movement of the control top opens only a second valve or valve seat to exhaust air from the air bag. Although the controls are illustrated and described with the plunger being uppermost, the controls can be used in an upside-down orientation, with the plunger being lowermost.

Although particular embodiments of the invention have been described and illustrated herein, it is recognized that modifications and variations may readily occur to those skilled in the art.

## Claims

1. An air bag control for mounting in a space (52) between vertically spaced main vehicle parts (66, 68) that are separated by air bags (16), to control the air pressure in at least one of the air bags so as to maintain it at a predetermined air bag height, wherein the control has a pressured air port (74, 136, 212) for receiving pressured air, an exhaust port (76, 206, 216) for dumping pressured air into the environment, and an air bag port (80, 138, 214) that connects to the air bag, wherein:
said control includes first and second telescope members (82, 106, 132, 142, 224, 230) with top and bottom ends (62, 64) that telescope one in the other to allow the increase and decrease in control height (A) between said ends, said control comprising a plurality of valves (98, 111, 161, 175, 263, 267) in said control including a first valve (98, 172, 263) that allows the passage of air only from said pressured air port to said air bag port when the distance between said top and bottom ends decreases below a predetermined height, and a second valve (111, 161, 267) that allows the passage of air only from said air bag port to said exhaust port when the distance between said top and bottom ends increases above said predetermined height,
**characterized in that**:
said first and second valves each comprises a valve seat (94,110;174,160) mounted on one of said first telescope members and a valve member (90,108; 170,152) that moves against and away from the corresponding valve seat to close and open the valve.

2. The control described in claim 1 wherein:
said second valve includes walls of a first of said telescope members that forms an exhaust passage (103) extending partially between said air bag port and said exhaust port, walls forming a second of said valve seats (110) lying along said exhaust passage, and a second of said valve members (108) attached to the second of said telescope members and moveable against said second valve seat when said control height is less than said predetermined air bag height.

3. The control described in claim 2 wherein:
said exhaust passage includes an air bag passage (101) that extends from said second valve seat (110) to said air bag port (80) and said exhaust passage (103) that extends from said valve seat to said exhaust port, said second valve member being moveable against a side of said second valve seat that is sealed to said exhaust passage portion;
said telescope members form a pressured air passage (104) that extends from said pressured air port through said first valve seat (94) to said air bag passage so when said second valve is closed but said first valve is opened, air from said pressured air port can flow only through said first valve seat and through said air bag passage to said air bag port.

4. The control described in claim 1 wherein:
said first valve includes a first element (170) that is moveable against and
away from a third valve seat (174) and that is forced by air pressure flowing into said pressured air port against said third valve seat, and a second element (152) that is depressable to move through said third valve seat to move said first element away from said third valve seat.

5. The control described in claim 1 wherein:
said plurality of valves includes a vertically moveable valve plate (250) with horizontally spaced opposite sides and with an aperture (264), with one of said telescope members having a pair of walls with a pair of aligned holes (256) that lie on opposite sides of said plate and that lead respectively to first and second of said ports, said plate holes being each out of alignment with said plate aperture when the control height is at said predetermined height,
said holes both being aligned with said plate aperture at a second height.

6. The control described in claim 5 wherein:
said plate has a slot (266) in one of said opposite sides, said slot having a first slot portion (268) aligned with only a first of said holes (256), and said slot having a second slot portion (269) that leads to a third of said ports.

## Patentansprüche

1. Airbag-Steuerung zur Anbringung in einem Raum (52) zwischen vertikal beabstandeten Hauptfahrzeugteilen (66, 68), welche durch Airbags (16) getrennt sind, zur Steuerung des Luftdrucks in mindestens einem Airbag, um diesen auf einer vorherbestimmten Airbag-Höhe zu halten, wobei die Steuerung eine Druckluftöffnung (74, 136, 212) zur Aufnahme von Druckluft, eine Auslassöffnung (76, 206, 216) zur Abgabe von Druckluft an die Umgebung und eine Airbag-Öffnung (80, 138, 214) aufweist, die die Verbindung mit dem Airbag herstellt, wobei die Steuerung ein erstes und ein zweites Teleskopelement (82, 106, 132, 142, 224, 230) mit einem oberen und einem unteren Ende (62, 64) aufweist, welche teleskopisch ineinander verschiebbar sind, um eine Vergrößerung und eine Verringerung der Steuerhöhe (A) zwischen den Enden zu gestatten, wobei die Steuerung eine Mehrzahl von Ventilen (98, 111, 161, 175, 263, 267) in der Steuerung aufweist, enthaltend ein erstes Ventil (98, 172, 263), welches den Durchgang von Luft nur von der Druckluftöffnung zur Airbag-Öffnung zulässt, wenn sich der Abstand zwischen dem oberen und dem unteren Ende unter eine vorherbestimmte Höhe verringert, und ein zweites Ventil (111, 161, 267), welches den Durchgang von Luft nur von der Airbag-Öffnung zur Auslassöffnung zulässt, wenn sich der Abstand zwischen dem oberen und dem unteren Ende über die vorherbestimmte Höhe vergrößert, **dadurch gekennzeichnet, dass** das erste und das zweite Ventil jeweils einen auf einem der ersten Teleskopelemente gelagerten Ventilsitz (94, 110; 174, 160) und ein Ventilelement (90, 108; 170, 152) aufweisen, welches sich zu und weg von dem entsprechenden Ventilsitz bewegt, um das Ventil zu schließen und zu öffnen.

2. Steuerung nach Anspruch 1, wobei das zweite Ventil Wände eines ersten der Teleskopelemente, welches einen sich teilweise zwischen der Airbag-Öffnung und der Auslassöffnung erstreckenden Auslasskanal (103) bildet, Wände, die einen zweiten der Ventilsitze (110) bilden, der sich entlang dem Auslasskanal befindet, und ein zweites der Ventilelemente (108) enthält, das am zweiten der Teleskopelemente befestigt und zum zweiten Ventilsitz bewegbar ist, wenn die Steuerhöhe geringer als die vorherbestimmte Airbag-Höhe ist.

3. Steuerung nach Anspruch 2, wobei der Auslasskanal einen Airbag-Kanal (101) aufweist, der sich vom zweiten Ventilsitz (110) zur Airbag-Öffnung (80) erstreckt, und den Auslasskanal (103), der sich vom Ventilsitz zur Auslassöffnung erstreckt, wobei das zweite Ventilelement zu einer Seite des zweiten Ventilsitzes bewegbar ist, die gegenüber dem Auslasskanal-Abschnitt abgedichtet ist; wobei die Teleskopelemente einen Druckluftkanal (104) bilden, welcher sich von der Druckluftöffnung durch den ersten Ventilsitz (94) zum Airbag-Kanal erstreckt, so dass bei geschlossenem zweitem Ventil, aber geöffnetem erstem Ventil Luft von der Druckluftöffnung nur durch den ersten Ventilsitz und durch den Airbag-Kanal zu der Airbag-Öffnung strömen kann.

4. Steuerung nach Anspruch 1, wobei das erste Ventil ein erstes Element (170), welches zu und weg von einem dritten Ventilsitz (174) bewegbar ist und von in die Druckluftöffnung strömendem Luftdruck gegen den dritten Ventilsitz gedrückt wird, und ein zweites Element (152) aufweist, welches niederdrückbar ist, um sich durch den dritten Ventilsitz zu bewegen, um das erste Element weg von dem dritten Ventilsitz zu bewegen.

5. Steuerung nach Anspruch 1, wobei die Mehrzahl von Ventilen eine vertikal bewegliche Ventilplatte (250) mit horizontal beabstandeten, gegenüberliegenden Seiten und mit einer Öffnung (264) aufweist, wobei eines der Teleskopelemente ein Paar Wände mit einem Paar fluchtender Löcher (256) aufweist, welche auf gegenüberliegenden Seiten der Platte liegen und zu der ersten bzw. zweiten Öffnung führen, wobei die Plattenlöcher jeweils außer Flucht mit der Plattenöffnung sind, wenn sich die Steuerhöhe auf der vorherbestimmten Höhe befindet, wobei die Löcher in einer zweiten Höhe beide mit der Plattenöffnung fluchten.

6. Steuerung nach Anspruch 5, wobei die Platte einen Schlitz (266) in einer der gegenüberliegenden Seiten aufweist, welcher Schlitz einen ersten Schlitzabschnitt (268) aufweist, der nur mit einem ersten Loch (256) fluchtet, und wobei der Schlitz einen zweiten Schlitzabschnitt (269) aufweist, der zu einer dritten Öffnung führt.

## Revendications

1. Commande d'airbag destinée à un montage dans un espace (52) entre des parties principales de véhicule espacées verticalement (66, 68) qui sont séparées par des airbags (16), pour commander la pression d'air dans au moins l'un des airbags afin de le maintenir à une hauteur prédéterminée d'airbag, dans laquelle la commande a un orifice d'air pressurisé (74, 136, 212) pour recevoir de l'air pressurisé, un orifice d'échappement (76, 206, 216) pour évacuer l'air pressurisé dans l'environnement, et un orifice d'airbag (80, 138, 214) qui se relie à l'airbag, dans laquelle :
ladite commande comprend des premier et deuxième organes de télescopage (82, 106, 132, 142, 224, 230) avec des extrémités supérieure et inférieure (62, 64) qui se télescopent l'une dans l'autre pour permettre l'augmentation et la diminution de la hauteur de commande (A) entre lesdites extrémités, ladite commande comprenant une pluralité de vannes (98, 111, 161, 175, 263, 267) dans ladite commande comprenant une première vanne (98, 172, 263) permettant le passage de l'air uniquement dudit orifice d'air pressurisé au dit orifice d'airbag lorsque la distance entre lesdites extrémités supérieure et inférieure diminue au-dessous d'une hauteur prédéterminée, et une deuxième vanne (111, 161, 267) permettant le passage de l'air uniquement dudit orifice d'airbag au dit orifice d'échappement lorsque la distance entre lesdites extrémités supérieure et inférieure augmente au-dessus de ladite hauteur prédéterminée,
**caractérisée en ce que** :
lesdites première et deuxième vannes comprennent chacune un siège de vanne (94, 110 ; 174, 160) monté sur l'un desdits premiers organes de télescopage et un organe de vanne (90, 108 ; 170, 152) qui vient contre le siège de vanne correspondant pour fermer la vanne et qui s'en écarte pour l'ouvrir.

2. Commande selon la revendication 1, dans laquelle :
ladite deuxième vanne comprend des parois d'un premier desdits organes de télescopage formant un passage d'échappement (103) s'étendant partiellement entre ledit orifice d'airbag et ledit orifice d'échappement, des parois formant un deuxième desdits sièges de vanne (110) se trouvant le long dudit passage d'échappement, et un deuxième desdits organes de vanne (108) attaché au deuxième desdits organes de télescopage et pouvant venir contre ledit deuxième siège de vanne lorsque ladite hauteur de commande est inférieure à ladite hauteur prédéterminée d'airbag.

3. Commande selon la revendication 2, dans laquelle :
ledit passage d'échappement comprend un passage d'airbag (101) qui s'étend dudit deuxième siège de vanne (110) au dit orifice d'airbag (80) et ledit passage d'échappement (103) qui s'étend dudit siège de vanne au dit orifice d'échappement, ledit deuxième organe de vanne pouvant venir contre un côté dudit deuxième siège de vanne qui est scellé sur ladite portion de passage d'échappement ;
lesdits organes de télescopage forment un passage d'air pressurisé (104) qui s'étend dudit orifice d'air pressurisé à travers ledit premier siège de vanne (94) au dit passage d'airbag de sorte que, lorsque ladite deuxième vanne est fermée mais ladite première vanne est ouverte, l'air provenant dudit orifice d'air pressurisé ne peut s'écouler qu'à travers ledit premier siège de vanne et à travers ledit passage d'airbag vers ledit orifice d'airbag.

4. Commande selon la revendication 1, dans laquelle :
ladite première vanne comprend un premier élément (170) qui peut venir contre un troisième siège de vanne (174) et s'en écarter et qui est forcé par la pression d'air s'écoulant dans ledit orifice d'air pressurisé contre ledit troisième siège de vanne, et un deuxième élément (152) qui peut être enfoncé pour se déplacer à travers ledit troisième siège de vanne afin d'écarter ledit premier élément dudit troisième siège de vanne.

5. Commande selon la revendication 1, dans laquelle :
ladite pluralité de vannes comprend une plaque de vanne pouvant se déplacer verticalement (250) avec des côtés opposés espacés horizontalement et avec une ouverture (264), avec l'un desdits organes de télescopage ayant une paire de parois avec une paire de trous alignés (256) se trouvant sur des côtés opposés de ladite plaque et conduisant respectivement vers un premier et un deuxièmes desdits orifices, lesdits trous de plaque étant chacun non alignés avec ladite ouverture de plaque lorsque la hauteur de commande est à ladite hauteur prédéterminée, lesdits trous étant tous les deux alignés avec ladite ouverture de plaque à une deuxième hauteur.

6. Commande selon la revendication 5, dans laquelle :
ladite plaque comporte une fente (266) dans l'un desdits côté opposés, ladite fente ayant une première portion de fente (268) alignée avec uniquement un premier desdits trous (256), et ladite fente ayant une deuxième portion de fente (269) conduisant à un troisième desdits orifices.
